# EUROPÄISCHE PATENTSCHRIFT

(11) **EP 1 663 751 B1**
(45) Veröffentlichungstag und Bekanntmachung des Hinweises auf die Patenterteilung: **08.09.2010**
(21) Anmeldenummer: 04765323.3
(22) Anmeldetag: 17.09.2004
(51) Int. Cl.: B61D 23/02, B60R 3/02

(54) **SCHIEBETRITT**
RETRACTABLE STEP
MARCHE COULISSANTE

(30) Priorität: 18.09.2003 AT 14742003
(43) Veröffentlichungstag der Anmeldung: 07.06.2006
(73) Patentinhaber: Knorr-Bremse Gesellschaft mit beschränkter Haftung, 2340 Mödling (AT)
(72) Erfinder: HIRTENLEHNER, Andreas, A-3340 Waidhofen an der Ybbs (AT)
(74) Vertreter: Schönmann, Kurt
(86) Internationale Anmeldenummer: PCT/EP2004/010426
(87) Internationale Veröffentlichungsnummer: WO 2005/030551

(56) Entgegenhaltungen:
- EP-A- 0 217 265
- EP-A- 1 034 765
- DE-A- 19 503 079

## Beschreibung

Die Erfindung betrifft ein an einem Schienenfahrzeug angebrachtes, bewegliches Trittbrett, einen sogenannten Schiebetritt für ein Schienenfahrzeug mit einem betretbaren Bereich mit seitlichen Führungen, einer Vorderkante und einem Führungsbereich, sowie einer am Wagenkasten vorgesehenen, ersten, seitlichen Rolle und einer zweiten Rolle am Schiebetritt, die mit einer wagenkastenfesten Führung zusammenwirkt, wobei der Übergang zwischen dem betretbaren Bereich und dem Führungsbereich als Knick und/oder Krümmung ausgebildet ist und eine nach oben konvexe Form aufweist, entsprechend dem einleitenden Teil des Anspruches 1 und der EP 0 217 265 A.

Diese Druckschrift offenbart einen komplexen Bewegungsmechanismus mit einer Vielzahl von Rollen. Die der "ersten" Rolle entsprechende Rolle ist nicht fest am Wagenkasten montiert, sondern schwenkt während der Bewegung des Schiebetritts um eine Achse und bewegt dabei auch einen Teil des Wagonbodens. Dies ist für Passagiere unangenehm bis gefährlich. Durch seine Komplexität ist dieser Mechanismus ausserdem aufwändig, schwer zu justieren und störanfällig.

Die DE 195 03 079 A offenbart einen Mechanismus mit zweiteiligem Schiebetritt, dessen Teile zueinander beweglich sind. Weiters ist seine Führung am Wagenkasten schräg und beweglich montiert. Beides, die Teilung des Schiebetritts und die Beweglichkeit der Führung sind mechanisch nachteilig und störanfällig.

Die EP 1 034 765 A offenbart einen Schiebetritt eines Busses mit komplexem Aufbau und mehreren Rollen, die mit zum Teil gekrümmten Führungen zusammenwirken. Der Schiebetritt wirkt weiters mit einem beweglich ausgebildeten Teil des Bodens im Türbereich zusammen. Dies ist für Passagiere unangenehm bis gefährlich und insgesamt aufwändig und schwer zu warten und zu justieren.

Bei Personenwaggons von schienengebundenen Fahrzeugen besteht das Problem, dass unter gewissen Betriebsbedingungen zwischen der untersten festen Trittstufe des Fahrzeuges und der Stirnwand des Bahnsteigs ein Spalt besteht, der für ältere und gebrechliche Personen, für Kinder und Hunde, aber auch für nachzuziehendes Gepäck u.dgl. ein Hindernis und eine Gefahr bildet. Da auch bei ein und derselben Bahnverwaltung auf unterschiedlichen Bahnhöfen stark voneinander abweichende geometrische Randbedingungen bestehen können und da bei den modernen, zumeist luftgefederten Fahrzeugen je nach Passagierzahl, Verteilung der Passagiere und gegebenenfalls auftretender Defekte der Luftfederung die unterschiedlichsten Lagen des Wagenkastens zu den Schienen auftreten können, nicht die Möglichkeit, diesen Spalt bei allen planmäßigen Haltestellen gleich groß und damit praktisch auch beliebig klein zu machen.

Es besteht daher die Notwendigkeit eines Schiebetritts, der nun aus Platzgründen nur an der Unterseite des Wagenkastens angeordnet werden kann. Dies bringt es mit sich, dass der Schiebetritt nur dort verwendbar ist, wo er oberhalb der Bahnsteigoberkante liegt, da er ansonsten beim Ausfahren die Stirnwand des Bahnsteiges trifft und, in den meisten Fällen, durch eine Kollisions-Erkennungs-Automatik wieder eingezogen wird. Nun gibt es zur Bewältigung der zunehmenden Passagierzahlen, insbesondere des Nahverkehrs, zunehmend die Tendenz, Doppelstockwaggons einzusetzen, bei denen die Unterseite des Wagenkastens sehr tief gelegt ist, um innerhalb des Lichtraumprofils genügend Höhe für die Unterbringung zweier Passagierdecks zu schaffen. Es war bisher nicht möglich, bei diesen Waggons oder auch bei einstöckigen Waggons mit tief liegendem Deck derartige Schiebetritte vorzusehen.

Ein weiteres Problem liegt in der Tatsache, dass Hindernisse, beispielsweise überdurchschnittlich hohe Bahnsteige, neben dem Gleis befindliche Gerätschaften oder wartende Fahrgäste, im Bereich der Schiebetritte zu unerwünschten, zum Teil gefährlichen Kollisionen führen können. Es besteht daher im Zusammenhang mit den ausschiebbaren Trittstufen die Notwendigkeit, den Bewegungsablauf während des Ausschiebens zu kontrollieren und gegebenenfalls zu stoppen.

Es ist das Ziel und die Aufgabe der Erfindung, einen Schiebetritt zu schaffen, der diesen Erfordernissen entspricht und auch unter obigen Einsatzbedingungen funktionsfähig und einsatzfähig ist und die Nachteile der eingangs genannten Vorrichtungen nicht aufweist.

Erfindungsgemäß werden diese Ziele in Übereinstimmung mit dem kennzeichnenden Teil des Anspruches 1 dadurch erreicht, dass die erste Rolle wagenkastenfest angeordnet ist und in einer seitlichen Führung gleitet, und dass die Führung für die zweite Rolle schräg und/oder gebogen und/oder geknickt ausgebildet ist.

Auf diese Weise ist es möglich, die bahnsteigseitige Kante des Schiebetrittes in einer schräg nach oben verlaufenden Richtung auszuschieben, wodurch sie auch über Bahnsteigoberkanten gelangt, die höher liegen als der Schiebetritt in seiner Ruheposition. Die Kontrolle des Bewegungsablaufes wird in einer Ausgestaltung dadurch erreicht, dass Sensoren an bestimmten Stellen des Schiebetritts, der Führung oder im Antriebs des Schiebetritts angebracht sind.

Die Erfindung wird im Folgenden an Hand der Zeichnung näher erläutert. Dabei zeigt
die Fig. 1 einen erfindungsgemäßen Schiebetritt in seiner Ruhelage,

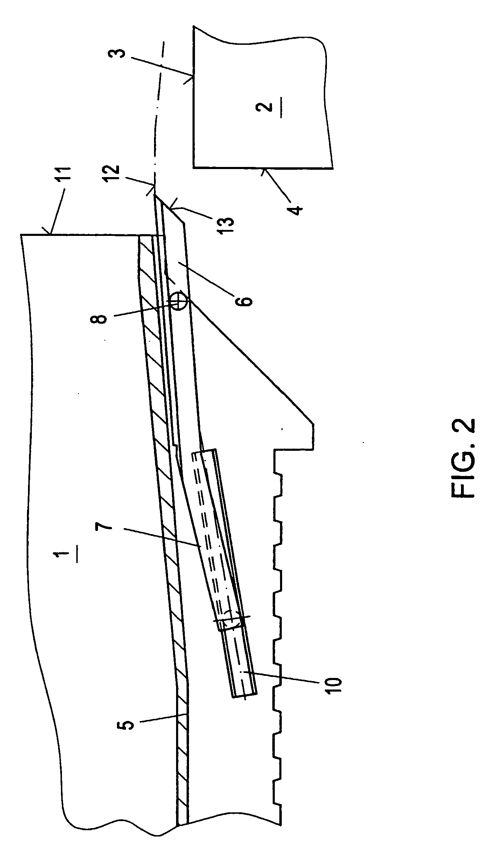

die Fig. 2 den Schiebetritt der Fig. 1 Beginn seiner Ausfahrbewegung,

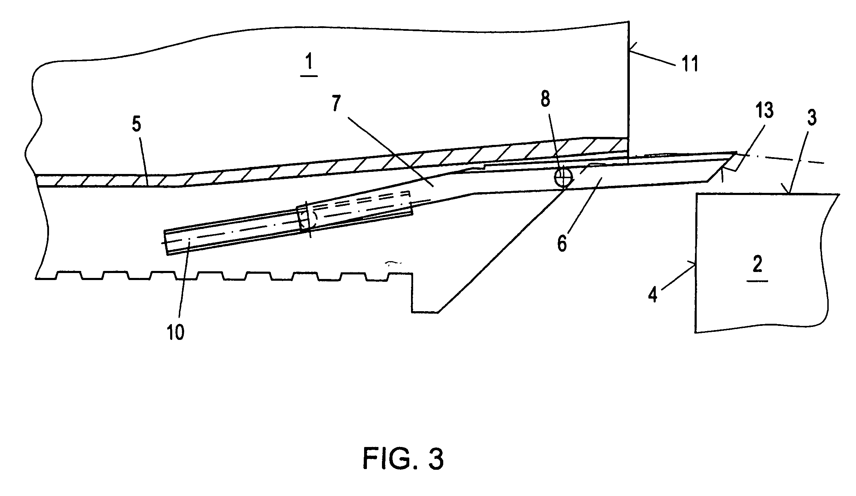

die Fig. 3 die Situation bei weiter ausgefahrenem Schiebetritt und

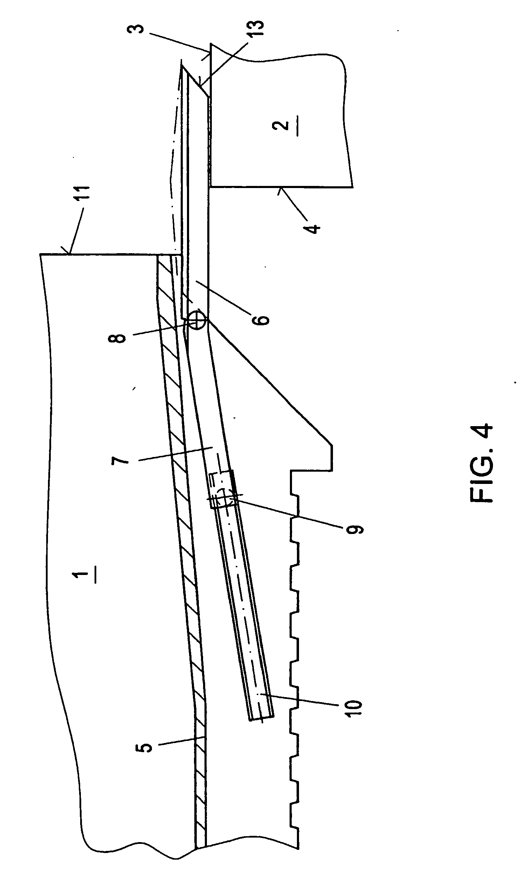

die Fig. 4 den voll ausgefahrenen Schiebetritt.

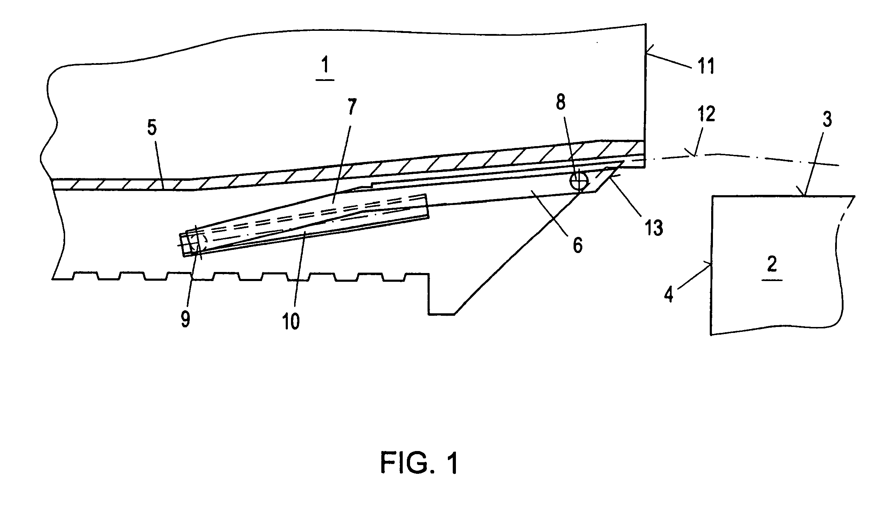

In Fig. 1 ist ein rein schematischer Schnitt normal zur Längsachse eines Schienenfahrzeuges 1 und damit normal zur Achse des Schienenstranges (nicht dargestellt). Wie aus Fig. 1 ersichtlich ist, besteht zwischen der dem Bahnsteig 2 zugewandten Seitenwand 11 des Fahrzeuges 1 und der Stirnwand 4 des Bahnsteiges 2 ein Abstand, der durch einen Schiebetritt 6 überbrückt werden soll. Die Fig. 1 zeigt die problematische Situation, in der die Unterseite 5 des Wagenkastens 1 etwa im Höhenbereich der Bahnsteigoberkante 3 liegt, so dass ein konventioneller, horizontal ausschiebbarer, unterhalb des Wagenkastens 1 bzw. dessen Bodenkonstruktion 5 angeordneter Schiebetritt gegen die Stirnwand 4 des Bahnsteiges 2 stieße.

Der erfindungsgemäße Schiebetritt besteht nun, wie der konventionelle auch, aus dem eigentlichen (betretbaren) Schiebetritt 6, der seitliche Führungen aufweist, in denen eine wagenkastenfeste erste Rolle 8 gleitet und einem fahrzeugseitigen (nicht betretbaren) Führungsbereich 7 mit einer zweiten Rolle 9, die in einer wagenkastenfesten Führung 10 gleitet. Erfindungsgemäß ist nun die Führung 10 nicht horizontal, sondern schräg und/oder gebogen, gegebenenfalls auch geknickt, ausgebildet und ermöglicht so eine Ausfahrbewegung der Vorderkante 13 des Schiebetrittes 6, die durch die strichpunktierte Linie 12 angedeutet ist. Wie aus dem Verlauf der Schiebekurve 12 ersichtlich ist, gelangt der Schiebetritt 6 in einer schräg nach oben gerichteten Bewegung über die Bahnsteigoberkante 3 und anschließend daran in einer schräg nach unten gerichteten Bewegung auf die (bzw. knapp über die) Oberfläche des Bahnsteiges zu liegen.

Diese Bewegung wird durch die geknickte Ausführung des Überganges zwischen dem begehbaren Bereich 6, der in der ausgeschobenen Lage im Spaltbereich zu liegen kommt, und seinem Führungsbereich 7, die einer nach oben konvexen Form entspricht, verstärkt, wobei durch die Wahl der Größe des Knickes bzw. der Krümmung des Schiebetrittes und die Schräglage und Krümmung bzw. den Knickwinkel der Führung 10 der Fachmann in Kenntnis der Erfindung leicht zwischen einer großen Vielzahl und Ausbildungsformen der ihn interessierenden Schiebekurve 12 wählen kann.

Die Bewegung des Schiebetritts erfolgt entweder dadurch, dass der Führungsbereich 7 von der bahnsteigfernen Seite in Richtung Bahnsteig 2 von einem Antrieb geschoben oder gezogen wird. Vorzugsweise handelt es sich dabei um einen pneumatischen Antrieb, der beispielsweise in Form einer Zylinder-Kolben-Einheit ausgeführt und mit einer Rückhaltefeder gekoppelt ist. Der Antrieb kann auch über biegsame Elemente wie Seil oder Kette erfolgen. Die zweite Rolle 9 kann auch direkt von einem Motor angetrieben sein und in Form eines Zahnrades entlang der Führung 10, die in dieser Ausgestaltung einer Zahnschiene entspricht, den Führungsbereich 7 vor- und zurückbewegen.

Um Hindernisse, beispielsweise überdurchschnittlich hohe Bahnsteige, neben dem Gleis befindliche Gerätschaften oder wartende Fahrgäste, beim Ausfahren des Schiebetritts nicht zu verletzen, muß der Bewegungsablauf des Schiebetritts kontrollierbar sein. In einer Ausgestaltung der Erfindung sind Sensoren am Schiebetritt so angebracht, dass sie etwaige Hindernisse rechtzeitig erkennen, so dass in Folge der Bewegungsablauf des ausfahrenden Schiebetritts gestoppt wird. Sensoren sind in Form von Bewegungssensoren im Bereich der Führung 10 und/oder direkt im Antriebsmechanismus integriert und registrieren unerwünschte Abweichungen vom normalen Bewegungsablauf während des Ausfahrens des Schiebetritts. Weitere Ausgestaltungen bestehen darin, Sensoren als Annäherungs- bzw. Berührungssensoren direkt an der Vorderkante 13 oder an der Unterseite des betretbaren Bereichs 6 anzuordnen. Mit an der Unterseite des betretbaren Bereichs 6 angebrachten Sensoren wird insbesondere ein Abstand zwischen Bahnsteig 2 und dem betretbaren Bereich der Trittstufe 6, sofern ein solcher vorgesehen ist, beispielsweise bei unebenen Bahnsteigsbereichen, einstellt.

Die eigentliche mechanische Ausbildung des Schiebetrittes, die Lagerung und Führung der Rollen und deren Dimensionierung sowie die Beschaffenheit und Montage der Antriebe unterscheidet sich nicht von denen üblicher Schiebetritte, so dass auf diese konstruktiven Details in der vorliegenden Beschreibung nicht näher eingegangen werden muß.

## Patentansprüche

1. Bewegliches Trittbrett, ein sogenannter Schiebetritt, für ein Schienenfahrzeug mit einem betretbaren Bereich (6) mit seitlichen Führungen, einer Vorderkante (13) und einem Führungsbereich (7), sowie einer am Wagenkasten (1) vorsehbaren, seitlichen ersten Rolle (8) und einer zweiten Rolle (9) Schiebetritt, die mit einer am Wagenkasten fest befestigbaren Führung (10) zusammenwirkt, wobei der Übergang zwischen dem betretbaren Bereich (6)
und dem Führungsbereich (7) als Knick und/oder Krümmung ausgebildet ist und eine nach oben konvexe Form aufweist, **dadurch gekennzeichnet, dass** die erste Rolle (8) am Wagenkasten fest anordbar ist und in einer seitlichen Führung gleitet, und dass die Führung (10) für die zweite Rolle (9) schräg und/oder gebogen und/oder geknickt ausgebildet ist.

2. Schiebetritt nach Anspruch 1, **dadurch gekennzeichnet, dass** der betretbare Bereich (6) und oder die Vorderkante (13) und/oder der Führungsbereich (7) und/oder die Führung (10) einen Sensor aufweist.

3. Schiebetritt nach Anspruch 2, **dadurch gekennzeichnet, dass** der Sensor ein Annäherungssensor ist.

4. Schiebetritt nach Anspruch 2, **dadurch gekennzeichnet, dass** der Sensor ein Bewegungssensor ist.

5. Schiebetritt nach Anspruch 2, **dadurch gekennzeichnet, dass** der Sensor ein Berührungssensor ist.

6. Schiebetritt nach Anspruch 1, **dadurch gekennzeichnet, dass** der Führungsbereich (7) entlang der Führung (10) in Richtung Bahnsteig (2) von einem pneumatischen oder einem aus biegsamen Elementen bestehenden Antrieb geschoben oder gezogen wird

7. Schiebetritt nach Anspruch 1, **dadurch gekennzeichnet, dass** der Führungsbereich (7) entlang der Führung (10) in Richtung Bahnsteig (2) durch die Rolle (9) bewegt wird.

8. Schiebetritt nach Anspruch 1, **dadurch gekennzeichnet, dass** die Rolle (9) ein Zahnrad ist und die Führung (10) eine Zahnschiene aufweist.

## Claims

1. Mobile footboard, a so-called rectractable step, for a rail vehicle comprising a step-on region (6) having lateral guides, a front edge (13) and a guiding region (7), as well as a lateral first roller (8) adapted to be provided on coach body and a second roller (9) on the retractable step, which interacts with a guide (10) adapted to be fixed on a coach body, with the transition between said step-on region (6) and said guiding region (7) being configured as a bend and/or as a curvature and presents an upwardly convex shape, **characterized in that** said first roller (8) is adapted to be fixedly disposed on the coach body and slides in a lateral guide, and that said guide (10) for said second roller (9) has an oblique and/or curved and/or bent configuration.

2. The retractable step as claimed in claim 1, **characterised in that** said step-on region (6) and/or said front edge (13) and/or said guiding region (7) and/or said guide (10) is provided with a sensor.

3. The retractable step as claimed in claim 2, **characterised in that** said sensor is a proximity sensor.

4. The retractable step as claimed in claim 2, **characterised in that** said sensor is a movement sensor.

5. The retractable step as claimed in claim 2, **characterised in that** said sensor is a contact sensor.

6. The retractable step as claimed in claim 1, **characterised in that** said guiding region (7) is pushed or pulled along said guide (10) in a direction towards the platform (2) by a pneumatic drive or a drive unit consisting of flexible elements.

7. The retractable step as claimed in claim 1, **characterised in that** said guiding region (7) is moved along said guide (10) in a direction towards the platform (2) by said roller (9).

8. The retractable step as claimed in claim 1, **characterised in that** said roller (9) is a gearwheel and that said guide (10) comprises a rack-type rail.

## Revendications

1. Marchepied mobile, dit marche coulissante, pour un véhicule sur rails, comprenant une zone de giron (6) ayant des glissière latérales, un bord avant (13) et une zone de guidage (7), ainsi qu'un premier galet (8) latéral apte à être disposé à la carrosserie et un deuxième galet (9) à la marche coulissante, qui interagit avec une glissière (10) apte à être fixé à la carrosserie, à une transition entre ladite zone de giron (6) et ladite zone de guidage (7) étant configurée en tant que courbure et/ou en tant qu'une courbe et présente une forme convexe en haut, **caractérisée en ce que** ledit premier galet (8) est apte à être fixé à la carrosserie et glisse dans une glissière latérale, et **en ce que** ladite glissière (10) pour ledit deuxième galet (9) présente une configuration en biais et/ou courbée et/ou flambée.

2. La marche coulissante selon la revendication 1, **caractérisée en ce que** ladite zone de giron (6) et/ou ledit bord avant (13) et/ou ladite zone de guidage (7) et/ou ladite glissière (10) est/sont muni(s) d'un détecteur.

3. La marche coulissante selon la revendication 2, **caractérisée en ce que** ledit détecteur est un détecteur d'approximation.

4. La marche coulissante selon la revendication 2, **caractérisée en ce que** ledit détecteur est un détecteur de mouvement.

5. La marche coulissante selon la revendication 2, **caractérisée en ce que** ledit détecteur est un détecteur de contact.

6. La marche coulissante selon la revendication 1, **caractérisée en ce que** ladite zone de guidage (7) est poussée ou tirée le long de ladite glissière (10) en un sens vers le quai par un mécanisme d'entraînement pneumatique ou par une unité d'entraînement composée des éléments flexibles.

7. La marche coulissante selon la revendication 1, **caractérisée en ce que** ladite zone de guidage (7) est déplacée le long de ladite glissière (10) en un sens vers le quai (2) par ledit galet (9).

8. La marche coulissante selon la revendication 1, **caractérisée en ce que** ledit galet (9) est une roue dentée et **en ce que** ladite glissière (10) comprend un rail du type crémaillère.
